# EUROPEAN PATENT SPECIFICATION

(11) **EP 2 949 901 B1**
(45) Date of publication and mention of the grant of the patent: **07.08.2019**
(21) Application number: 14743457.5
(22) Date of filing: 06.01.2014
(51) Int. Cl.: F02B 25/04, F02M 21/02, F02B 7/08

(54) **UNIFLOW-SCAVENGED TWO-CYCLE ENGINE AND FUEL INJECTION METHOD FOR UNIFLOW-SCAVENGED TWO-CYCLE ENGINE**
DURCH EINEN UNIDIREKTIONALEN FLUSS GESPÜLTER ZWEITAKTMOTOR UND KRAFTSTOFFEINSPRITZVERFAHREN FÜR DEN DURCH EINEN UNIDIREKTIONALEN FLUSS GESPÜLTEN ZWEITAKTMOTOR
MOTEUR À DEUX TEMPS ÉQUICOURANT À BALAYAGE ET PROCÉDÉ D'INJECTION DE CARBURANT POUR MOTEUR À DEUX TEMPS ÉQUICOURANT À BALAYAGE

(30) Priority: 28.01.2013 JP 2013013559
(43) Date of publication of application: 02.12.2015
(73) Proprietor: IHI Corporation, Tokyo 135-8710 (JP)
(72) Inventor: MASUDA, Yutaka, Tokyo 135-8710 (JP); YAMADA, Takeshi, Tokyo 135-8710 (JP); HIROSE, Takayuki, Tokyo 135-8710 (JP); YAMADA, Takayuki, Tokyo 135-8710 (JP); KUGE, Takahiro, Tokyo 135-8710 (JP)
(74) Representative: TBK
(86) International application number: PCT/JP2014/050014
(87) International publication number: WO 2014/115572

(56) References cited:
- JP-A- H04 132 857
- JP-A- H10 299 578
- JP-A- 2003 529 710
- JP-A- 2012 036 780
- JP-A- 2012 154 188
- JP-A- 2012 154 188
- JP-A- 2013 007 320

## Description

### Technical Field

The present invention relates to a uniflow-scavenged two-cycle engine in which premixed gas produced by injecting fuel gas into active gas imported from a scavenging port is burned, and to a fuel injection method for the uniflow-scavenged two-cycle engine.

### Background Art

In a uniflow-scavenged two-cycle engine (two-stroke engine) used for a combustion engine of, for example, a ship, an exhaust port is provided in one end portion of a cylinder in the stroke direction of a piston, and a scavenging port is provided on the other end-side of the cylinder in the stroke direction of the piston. When active gas is imported from the scavenging port into a combustion chamber at the intake step (gas supply step), exhaust gas generated through the combustion operation is pushed out by the imported active gas from the exhaust port and is discharged therefrom. In the configuration disclosed in Patent Document 1, injectors disposed on two sides of an exhaust port inject fuel gas into the imported active gas, thereby producing premixed gas. The combustion operation is obtained by compressing the produced premixed gas, and a piston reciprocates inside a cylinder by an explosion pressure generated through the combustion operation.

In such a uniflow-scavenged two-cycle engine, if the mixing between fuel gas and active gas is insufficient, the density of fuel gas may be partially increased, and problems such as the preignition and the discharge of unburned gas may occur. Accordingly, for example, as shown in Patent Document 2, a configuration is proposed in which an injector which injects fuel gas is provided inside a scavenging port, the mixing between fuel gas and active gas is started before the active gas is imported into a cylinder, and thereby the mixing time of fuel gas and active gas inside the cylinder is secured.

### Document of Related Art

### Patent Document

[Patent Document 1] Japanese Unexamined Patent Application, First Publication JP 2012-167 666 A
[Patent Document 2] Japanese Unexamined Patent Application, First Publication JP H10-299 578 A

### Summary of Invention

### Technical Problem

However, in the configuration of Patent Document 2 described above, during a process in which active gas and fuel gas flow from the scavenging port to the combustion chamber, an area may be formed in the center of the cylinder or in the vicinity of the center thereof, the flow velocity of gas in the area being lower than that in another area near the outer circumference of the cylinder. Therefore, an area having thin premixed gas, namely an area having thin combustion gas may remain in the combustion chamber at the time the piston reaches the top dead center thereof, premixed gas (combustion gas) may be non-uniform within the combustion chamber, and thus the efficient combustion may not be performed.

Furthermore, an inflow-scavenged two-cycle engine according to the preamble of claim 1 is known from JP 2012 154 188 A. A further two-cycle engine is disclosed in JP 2012 036 780 A.

In view of the above circumstances, an object of the present invention is to provide a uniflow-scavenged two-cycle engine and a fuel injection method for the uniflow-scavenged two-cycle engine, in which premixed gas (fuel gas) can be uniformly supplied into a combustion chamber and the efficient combustion can be realized.

According to the present invention, the above object is solved with an uniflow-scavenged two-cycle engine having the features of claim 1, and with a fuel injection method having the features of claim 4.

### Effects of Invention

According to a uniflow-scavenged two-cycle engine of the present invention, premixed gas (fuel gas) can be uniformly supplied into a combustion chamber, and efficient combustion can be realized.

### Brief Description of Drawings

FIG. 1 is an explanatory view showing the overall configuration of a uniflow-scavenged two-cycle engine.
FIG. 2A is an external view of a scavenging port.
FIG. 2B is an enlarged view of an area enclosed by a short dashed line in FIG. 2A.
FIG. 3 is an explanatory view showing operations of control parts in accordance with a crank angle.
FIG. 4A is a schematic view showing a first state in the operation of a piston.
FIG. 4B is a schematic view showing a second state in the operation of the piston.
FIG. 4C is a schematic view showing a third state in the operation of the piston.
FIG. 4D is a schematic view showing a fourth state in the operation of the piston.
FIG. 4E is a schematic view showing a fifth state in the operation of the piston.
FIG. 4F is a schematic view showing a sixth state in the operation of the piston.
FIG. 5A is an explanatory view showing a first state of the flow of premixed gas inside a cylinder.
FIG. 5B is an explanatory view showing a second state of the flow of premixed gas inside the cylinder.
FIG. 5C is an explanatory view showing a third state of the flow of premixed gas inside the cylinder.
FIG. 5D is an explanatory view showing a fourth state of the flow of premixed gas inside the cylinder.
FIG. 5E is an explanatory view showing a first state of the flow of premixed gas inside a cylinder of a comparative example.
FIG. 5F is an explanatory view showing a second state of the flow of premixed gas inside the cylinder of the comparative example.
FIG. 5G is an explanatory view showing a third state of the flow of premixed gas inside the cylinder of the comparative example.
FIG. 6 is an explanatory view showing operations of control parts in accordance with a crank angle of a first explanatory example.
FIG. 7A is a schematic view showing a first state in the operation of a piston of a second explanatory example.
FIG. 7B is a schematic view showing a second state in the operation of the piston of the second explanatory example.
FIG. 7C is a schematic view showing a third state in the operation of the piston of the second explanatory example.
FIG. 7D is a schematic view showing a fourth state in the operation of the piston of the second explanatory example.
FIG. 7E is a schematic view showing a fifth state in the operation of the piston of the second explanatory example.
FIG. 7F is a schematic view showing a sixth state in the operation of the piston of the second explanatory example.

### Description of Embodiments

Hereinafter, preferable embodiments of the present invention are described in detail with reference to the attached drawings. Dimensions, materials, other specific numerical values and the like shown in the embodiments are merely examples which facilitate understanding of the present invention and do not limit the present invention other than a case where a special description limiting it is provided. Additionally, in the specification and drawings, components having substantially the same function and structure are represented by the same reference sign, and thereby duplicate descriptions thereof are omitted. Furthermore, illustrations of components not directly relating to the present invention are omitted.

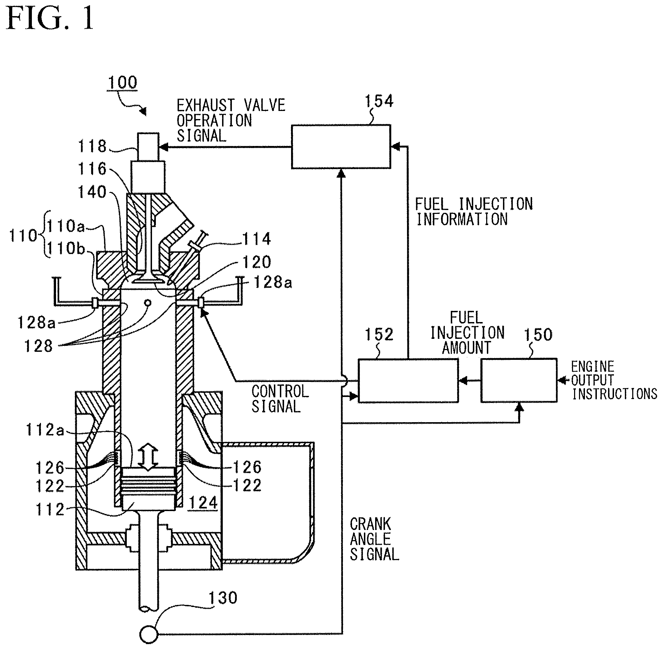

FIG. 1 is an explanatory view showing an overall configuration of a uniflow-scavenged two-cycle engine 100. The uniflow-scavenged two-cycle engine 100 of this embodiment is used for, for example, a ship. Specifically, the uniflow-scavenged two-cycle engine 100 includes a cylinder 110 (including a cylinder head 110a and a cylinder block 110b), a piston 112, a pilot injection valve 114, an exhaust port 116, an exhaust valve actuator 118, an exhaust valve 120, scavenging ports 122, a scavenging chamber 124, first fuel injection portions 126, second fuel injection portions 128, a rotary encoder 130 and a combustion chamber 140. The two-cycle engine 100 further includes control parts such as a governor 150 (speed regulator), a fuel injection controller 152 and an exhaust controller 154, and is controlled by the control parts.

In the uniflow-scavenged two-cycle engine 100, the piston 112 linked to a crosshead (not shown) reciprocates so as to slide inside the cylinder 110 through four continuous steps of intake (gas supply), compression, combustion and exhaust. In the crosshead-type piston 112, the stroke (stroke length) thereof inside the cylinder 110 can be set to be comparatively long, and the crosshead can receive a side pressure acting on the piston 112, whereby it is possible to increase the output value of the uniflow-scavenged two-cycle engine 100. Furthermore, the cylinder 110 and a crankcase (not shown) accommodating the crosshead are isolated from each other, and thus it is possible to prevent defacement and deterioration of the crankcase even if a low grade fuel oil is used therein.

The pilot injection valve 114 is provided on the upper end-side of the cylinder 110 (the other end-side (the other end portion) of the cylinder 110 in the stroke direction of the piston 112), namely in the cylinder head 110a positioned above the end portion 112a on the top dead center-side of the piston 112. That is, the pilot injection valve 114 is provided in the cylinder head 110a and is disposed above the end portion 112a at the time the piston 112 is positioned at the top dead center thereof. The end portion 112a is disposed in the piston 112 so as to face the upper end (the other end) of the cylinder 110. The pilot injection valve 114 injects an appropriate amount of fuel oil into the combustion chamber 140 at a desired time during the engine cycle. The fuel oil spontaneously ignites due to the heat of the combustion chamber 140 enclosed by the cylinder head 110a, the cylinder liner of the cylinder block 110b, and the piston 112, and burns in a short time, thereby significantly increasing the temperature of the combustion chamber 140. Premixed gas containing fuel gas is ignited by the combustion of the fuel oil, and therefore it is possible to reliably burn the premixed gas at a desired time.

The exhaust port 116 is an opening provided on the upper end-side of the cylinder 110, namely in the cylinder head 110a positioned above the end portion 112a of the piston 112 being at the top dead center thereof. The exhaust port 116 is opened and closed in order to discharge exhaust gas generated inside the cylinder 110 after the combustion. The exhaust valve actuator 118 slides the exhaust valve 120 upward and downward at predetermined times, thereby opening and closing the exhaust port 116. The exhaust gas discharged through the exhaust port 116 in this way is supplied to, for example, the turbine-side of a turbocharger (not shown), and thereafter is discharged into the outside of the engine.

The scavenging port 122 is a hole penetrating the lower end-side of the cylinder 110 (the one end-side (the one end portion) of the cylinder 110 in the stroke direction of the piston 112) from the inner circumferential surface (the inner circumferential surface of the cylinder block 110b) to the outer circumferential surface thereof, and a plurality of scavenging ports 122 are provided on the entire circumference of the cylinder 110. That is, the scavenging ports 122 are provided in the vicinity of the lower end (the one end) of the cylinder 110. The scavenging ports 122 import active gas into the cylinder 110 in accordance with the sliding movement of the piston 112. The active gas is an oxidizing agent such as oxygen or ozone, or mixed gas thereof (for example, air). That is, in this embodiment, oxidizing gas is used for the active gas. The scavenging chamber 124 is filled with active gas (for example, air) pressurized by the compressor of a turbocharger (not shown). The active gas is imported from the scavenging chamber 124 through the scavenging ports 122 into the cylinder 110 due to a pressure difference between the insides of the scavenging chamber 124 and of the cylinder 110. Although the pressure of the scavenging chamber 124 can be approximately constant, in a case where the pressure of the scavenging chamber 124 changes, a pressure gauge may be provided on the scavenging port 122 or the like, and another parameter such as the injection amount of fuel gas may be controlled in accordance with a measured value of the gauge.

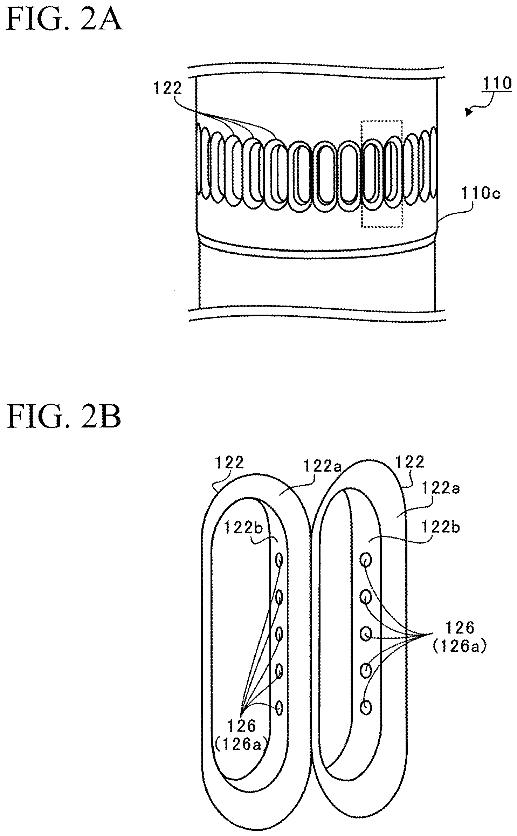

FIG. 2A is an external view of the scavenging ports 122, and FIG. 2B shows an enlarged view of an area enclosed by a short dashed line in FIG. 2A. As shown in FIGS. 2A and 2B, a taper 122a is formed on the side of the scavenging port 122 near the outer circumferential surface 110c of the cylinder 110, and the taper 122a adjusts the flow of active gas imported from the scavenging chamber 124.

Each scavenging port 122 of this embodiment is formed in a hole having an oval shape extending in the central axis direction of the cylinder 110. The scavenging ports 122 are arranged in the circumferential direction of the cylinder 110. It is preferable that the interval between the scavenging ports 122 next to each other be narrow in order to supply active gas into the cylinder 110 uniformly in the circumferential direction thereof. In addition, the shape of each scavenging port 122 may be a circular shape or a rectangular shape.

The first fuel injection portion 126 is configured to be a fuel injection port communicating with a fuel injection valve (not shown), and the first fuel injection portions 126 are provided on each scavenging port 122. The first fuel injection portions 126 open on a wall 122b within the inner circumferential surfaces forming the scavenging port 122, the wall 122b being positioned to be inner of the cylinder 110 than the taper 122a. That is, the first fuel injection portion 126 includes an opening 126a which opens on the wall 122b of the scavenging port 122.

In this embodiment, five first fuel injection portions 126 are provided on one wall surface of a pair of wall surfaces within the wall 122b, the pair of wall surfaces facing to each other and extending in the central axis direction of the cylinder 110. In addition, the first fuel injection portion 126 may be provided on the other wall surface of the wall 122b.

The fuel injection valve communicating with the first fuel injection portion 126 receives instructions from the fuel injection controller 152 as shown in FIG. 1, and injects fuel gas obtained by gasifying, for example, LNG (Liquefied Natural Gas). Then, the first fuel injection portion 126 injects the fuel gas toward active gas imported to the scavenging port 122.

The second fuel injection portion 128 is configured to be a fuel injection port communicating with a fuel injection valve 128a, and a plurality of second fuel injection portions 128 are provided on the entire circumference of the cylinder 110 on the upper end-side of the cylinder 110 than the scavenging ports 122. That is, the second fuel injection portions 128 are provided in the cylinder liner (a cylindrical portion) of the cylinder block 110b and are provided at positions closer to the upper end (the other end) of the cylinder 110 than the scavenging ports 122 in the stroke direction of the piston 112. The fuel injection valves 128a inject fuel gas by receiving instructions from the fuel injection controller 152. That is, the first fuel injection portions 126 and the second fuel injection portions 128 sequentially inject fuel gas into active gas imported from the scavenging ports 122 into the cylinder 110. It is preferable that the second fuel injection portions 128 be configured to inject fuel gas toward the center of the cylinder 110.

Although the fuel gas, which is injected from the first fuel injection portions 126 and from the second fuel injection portions 128, is gas obtained by gasifying LNG (Liquefied Natural Gas), it is not limited to LNG, and gas obtained by gasifying, for example, LPG (Liquefied Petroleum Gas), light oil, heavy oil or the like can also be used. In addition, a fuel which gasifies at an ordinary temperature, a fuel obtained by evaporating and gasifying a liquid fuel, a fuel obtained by making a liquid fuel into fine particles, or the like may be used for the gasified fuel gas.

The rotary encoder 130 is provided in a crank mechanism (not shown) and detects an angle signal of a crank (hereinafter, referred to as "a crank angle signal").

The governor 150 determines a fuel injection amount based on an engine output instruction value input from a superior controller (not shown) and on an engine rotational speed determined based on crank angle signals from the rotary encoder 130, and outputs to the fuel injection controller 152, the information indicating the fuel injection amount.

The fuel injection controller 152 controls the fuel injection valves communicating with the first fuel injection portions 126 and the fuel injection valves 128a communicating with the second fuel injection portions 128 based on the information indicating the fuel injection amount input from the governor 150 and on a crank angle signal from the rotary encoder 130. The fuel injection controller 152 in this embodiment is configured to start the injection of fuel gas from the second fuel injection portion 128 after the injection of fuel gas from the first fuel injection portion 126 is finished.

The exhaust controller 154 outputs an exhaust valve operation signal to the exhaust valve actuator 118 based on a signal relating to the fuel injection amount from the fuel injection controller 152 and on a crank angle signal from the rotary encoder 130.

Hereinafter, operations of control parts in the engine cycle of the above uniflow-scavenged two-cycle engine 100 are described.

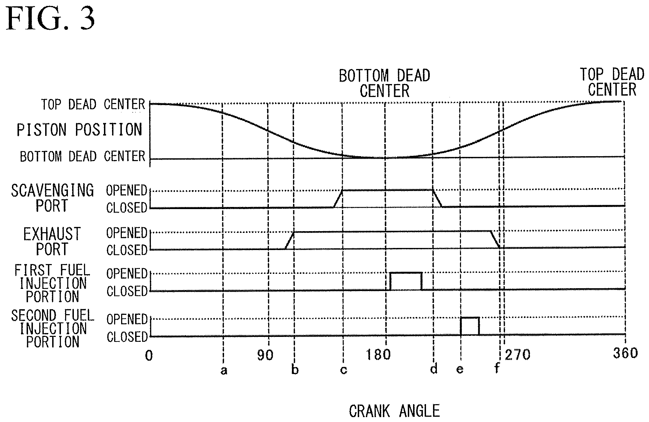

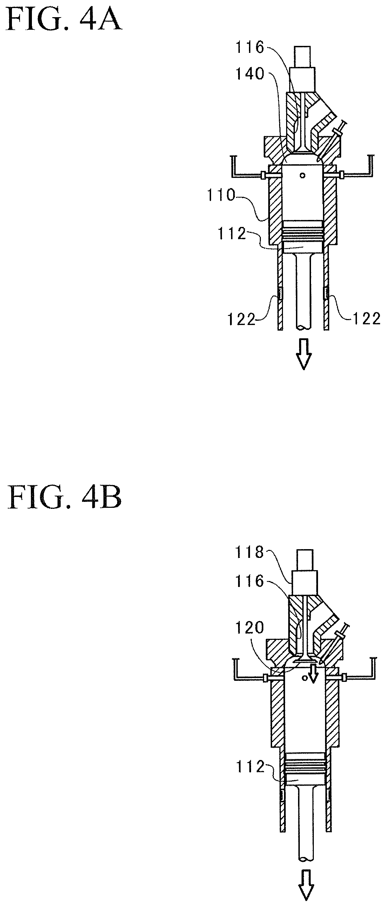

FIG. 3 is an explanatory view showing operations of control parts in accordance with a crank angle, and FIGS. 4A to 4F are schematic views showing the operation of the piston 112. At the time the exhaust step is started after the combustion step, the exhaust port 116 and the scavenging ports 122 do not communicate with the combustion chamber 140, and the combustion chamber 140 (the inside of the cylinder 110) is filled with exhaust gas (refer to the crank angle a shown in FIG. 3 and to FIG. 4A).

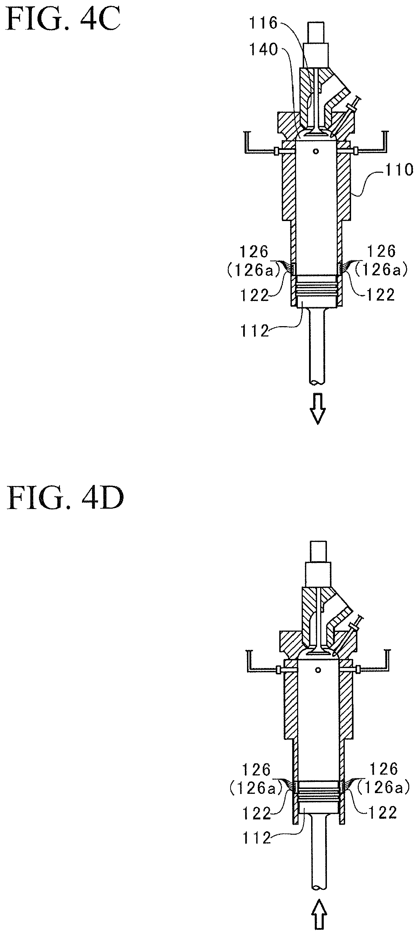

When the piston 112 goes down and approaches the bottom dead center thereof due to an explosion pressure generated through the combustion operation in the combustion chamber 140, the exhaust controller 154 opens the exhaust valve 120 using the exhaust valve actuator 118 (refer to the crank angle b shown in FIG. 3 and to FIG. 4B). Thereafter, the scavenging ports 122 open in accordance with the sliding movement of the piston 112 (refer to the crank angle c shown in FIG. 3 and to FIG. 4C). Then, active gas is imported from the scavenging ports 122 into the cylinder 110.

At this time, a layer of exhaust gas filled in the combustion chamber 140 (the inside of the cylinder 110) is pushed out from the exhaust port 116 by a layer of active gas imported from the scavenging ports 122 thereinto.

Thereafter, the compression step is started in which the piston 112 goes up from the bottom dead center to the top dead center. The fuel injection controller 152 opens the fuel injection valves communicating with the first fuel injection portions 126 based on the information indicating the fuel injection amount input from the governor 150, on the engine rotational speed determined by crank angle signals from the rotary encoder 130, or on the like. In this way, the openings 126a of the first fuel injection portions 126 inject fuel gas into the scavenging port 122 (first injection step). Therefore, fuel gas is injected into active gas imported to the scavenging port 122, and premixed gas is produced.

The layer of the premixed gas is formed on the lower end-side of the cylinder 110 than the above-described layers of exhaust gas and of active gas, and the premixed gas goes up inside the cylinder 110 so as to form a swirl (a spiral flow).

Next, the fuel injection controller 152 closes the fuel injection valves communicating with the first fuel injection portions 126, and the injection of fuel gas from the first fuel injection portions 126 into the scavenging port 122 stops. Thereafter, the scavenging ports 122 are closed by the piston 112, and the import of active gas is stopped (refer to the crank angle d shown in FIG. 3 and to FIG. 4D).

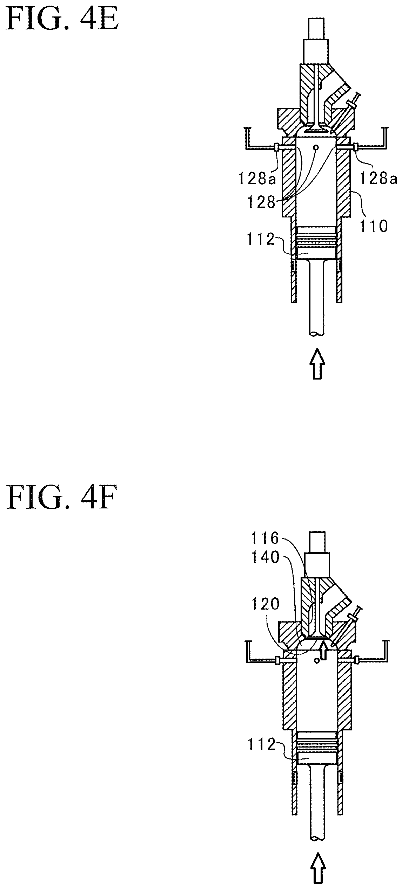

While the piston 112 (the end portion 112a) is positioned to be closer to the lower end of the cylinder 110 than the second fuel injection portions 128, the fuel injection controller 152 opens the fuel injection valves 128a communicating with the second fuel injection portions 128. Accordingly, the second fuel injection portions 128 inject fuel gas into active gas inside the cylinder 110, the active gas having been imported from the scavenging ports 122 into the cylinder 110 (refer to the crank angle e shown in FIG. 3 and to FIG. 4E, second injection step).

Next, the fuel injection controller 152 closes the fuel injection valves 128a communicating with the second fuel injection portions 128, and the injection of fuel gas from the second fuel injection portions 128 into the cylinder 110 stops.

Until this time, the exhaust controller 154 maintains the exhaust valve 120 in the open state, and exhaust gas in the combustion chamber 140 (the inside of the cylinder 110) continues being discharged from the exhaust port 116 in accordance with the rising movement of the piston 112. Thereafter, the exhaust controller 154 closes the exhaust valve 120 (refer to the crank angle f shown in FIG. 3 and to FIG. 4F).

The piston 112 goes up in a state where the exhaust valve 120 is closed, and thereby premixed gas is compressed inside the combustion chamber 140. The pilot injection valve 114 injects fuel oil into the premixed gas sufficiently compressed inside the combustion chamber 140, and the premixed gas is burned in the combustion chamber 140. Therefore, as described above, the exhaust step, the intake step, the compression step and the combustion step are repeated.

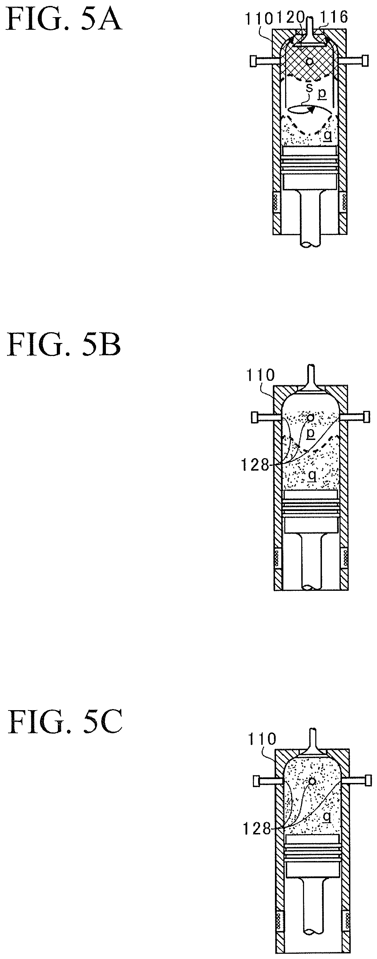

In addition, even if the second fuel injection portions 128 are not provided, it is possible to operate the uniflow-scavenged two-cycle engine 100 by supplying fuel gas from the first fuel injection portions 126 provided on the scavenging ports 122. However, there is room for improvement on deterioration of combustion efficiency due to non-uniformity of premixed gas (fuel gas) inside the cylinder 110. Specifically, it is described in detail using FIGS. 5A to 5G.

FIGS. 5A to 5G are explanatory views used to explain the flow of premixed gas q inside the cylinder 110. In FIGS. 5A to 5G, in order to facilitate understanding thereof, the structures of the cylinder head 110a and of the cylinder block 110b are simplified and shown in an integrated structure, and the upper end-side of the cylinder 110 is extracted and shown.

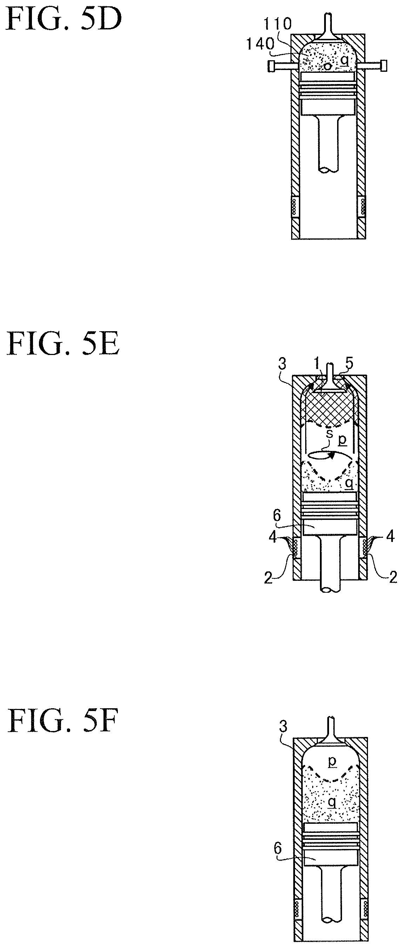

First, a comparative example shown in FIGS. 5E to 5G is described. As shown in FIG. 5E, during opening of an exhaust valve 1, exhaust gas (shown by cross-hatching in FIG. 5E) is pushed out from the exhaust valve 1 by active gas p imported from scavenging ports 2.

In addition, a layer of premixed gas q obtained by mixing active gas p with fuel gas injected from first fuel injection portions 4 is formed at a position closer to the lower end of a cylinder 3 than the layer of active gas p. At this time, although the rising velocity of gas inside the cylinder 3 in the vicinity of the wall surface of the cylinder 3 slightly deteriorates due to the friction between the gas and the wall surface and to the viscosity of the gas, generally, the rising velocity of gas on the radially outside (peripheral side) of the cylinder 3 is greater than that on the radially inside (central side) thereof.

This is because the flow velocity on the radially outside of the cylinder 3 is increased due to a swirl s. In addition, the exhaust valve 1 is positioned on the radially inside of the cylinder 3 so as to face an exhaust port 5. Therefore, a gap between the exhaust port 5 and the exhaust valve 1 opens toward the radially outside of the cylinder 3, and this is also a factor in that the flow velocity on the radially outside of the cylinder 3 is greater than that on the radially inside thereof.

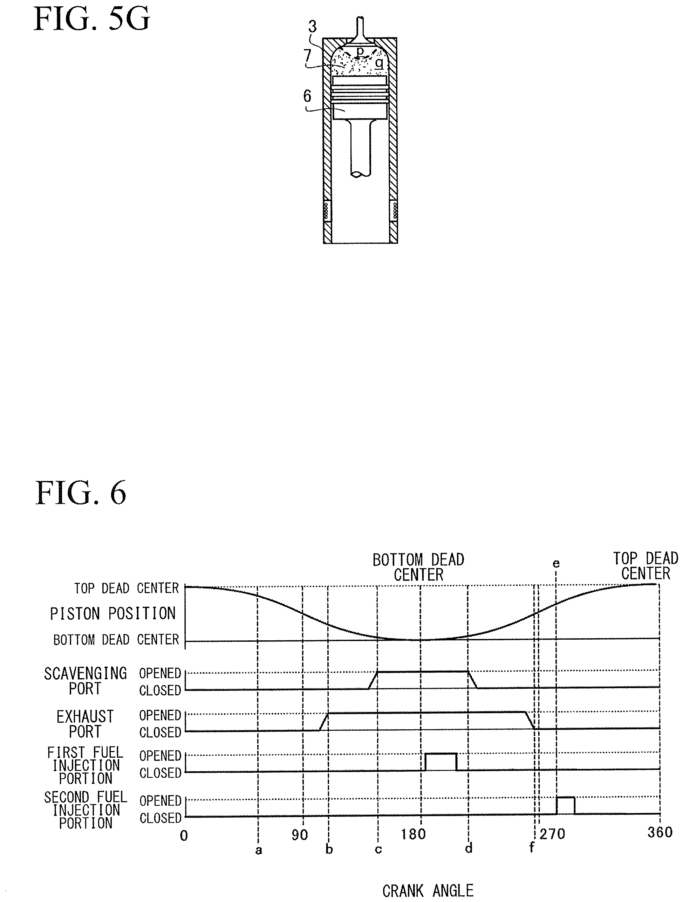

While a piston 6 goes up toward the top dead center thereof, as shown in FIG. 5F, active gas p and premixed gas q remain inside the cylinder 3 after the discharge of exhaust gas is finished, and in this state, the inside of the cylinder 3 becomes a state just before the explosion in a combustion chamber 7 shown in FIG. 5G. However, since variations occur in the flow velocity of premixed gas q as described above, as shown in FIG. 5G, an area having only active gas p may remain on the radially inside of the cylinder 3, or even if premixed gas q is contained therein, an area having a low density of premixed gas q (hereinafter, merely referred to as "an area having only active gas p") may remain thereon.

Therefore, in this embodiment, after exhaust gas shown by cross-hatching in FIG. 5A is discharged, as shown in FIG. 5B, the second fuel injection portions 128 provided on the upper end-side of the cylinder 110 inject fuel gas into the layer of active gas p. Then, premixed gas q is produced by mixing active gas p and the fuel gas together, and as shown in FIG. 5C, an area having only active gas p disappears. Accordingly, as shown in FIG. 5D, just before the explosion is caused in the combustion chamber 140, an area having only active gas p does not remain inside the combustion chamber 140, fuel gas is filled in the entire combustion chamber 140, and thus efficient combustion operation can be realized.

In addition, through experiments or the like, if the position of an area in which active gas p easily occurs (an area having a low density of fuel gas) is determined within the cylinder 110 during the rising movement of the piston 112, the second fuel injection portions 128 may be configured to inject fuel gas into the area.

In addition, the amount of active gas p capable of being imported from the scavenging ports 122 has a limit, and the amount of fuel gas capable of being burned using the active gas p is also limited. As in the above-described comparative example, if an area having only active gas p remains in the combustion chamber 7, the active gas p in the area may be discharged without sufficiently contributing to the combustion. In this embodiment, an area having only active gas p almost does not remain, and most of the active gas p contained in the combustion chamber 140 can contribute to the combustion. Therefore, the amount of active gas p contributing to the combustion is increased, and depending on the increase, it is possible to increase the amount of fuel gas capable of being supplied and to improve the output value of the engine.

### (First Explanatory example)

In the above-described embodiment, a case is described in which the second fuel injection portions 128 inject fuel gas before the exhaust valve 120 is closed. In a first explanatory example, the second fuel injection portions 128 start injecting fuel gas after the exhaust valve 120 is closed. Additionally, the description of a component having substantially the same function as that in the above-described embodiment is omitted.

FIG. 6 is an explanatory view showing operations of control parts in accordance with a crank angle in the first explanatory example. As shown in FIG. 6, in the first explanatory example, the scavenging ports 122 are closed and the import of active gas p is stopped (refer to the crank angle d shown in FIG. 6), and thereafter the exhaust controller 154 closes the exhaust valve 120 (refer to the crank angle f shown in FIG. 6).

After the exhaust valve 120 is closed, the fuel injection controller 152 makes the second fuel injection portions 128 start injecting fuel gas.

Furthermore, in order to start injecting fuel gas after closing of the exhaust valve 120, the second fuel injection portions 128 are provided at positions closer to the upper end of the cylinder 110 than the end portion 112a of the piston 112 at the time the exhaust valve 120 closes the exhaust port 116. In addition, the arrangement of the second fuel injection portions 128 of the above-described embodiment is the same as that of the first explanatory example.

According to the configuration in which the second fuel injection portions 128 are arranged in this way, the second fuel injection portions 128 start injecting fuel gas after the exhaust valve 120 is closed, and thereby it is possible to reliably prevent the blow-by in which the fuel gas injected from at least the second fuel injection portions 128 is discharged through the exhaust valve 120 without being burned.

### (Second Explanatory example)

In the above-described embodiment and first explanatory example, a case is described in which the second fuel injection portions 128 are provided at positions closer to the upper end of the cylinder 110 than the end portion 112a of the piston 112 at the time the exhaust valve 120 closes the exhaust port 116. In a second explanatory example, the second fuel injection portions 128 are provided at positions closer to the lower end (the one end) of the cylinder 110 than the end portion 112a of the piston 112 at the time the exhaust valve 120 closes the exhaust port 116. Additionally, the description of a component having substantially the same function as that of the above-described embodiment and first explanatory example is omitted.

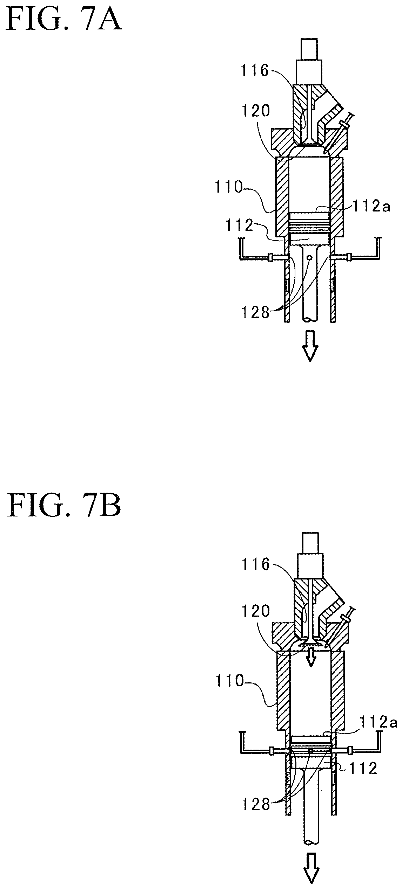

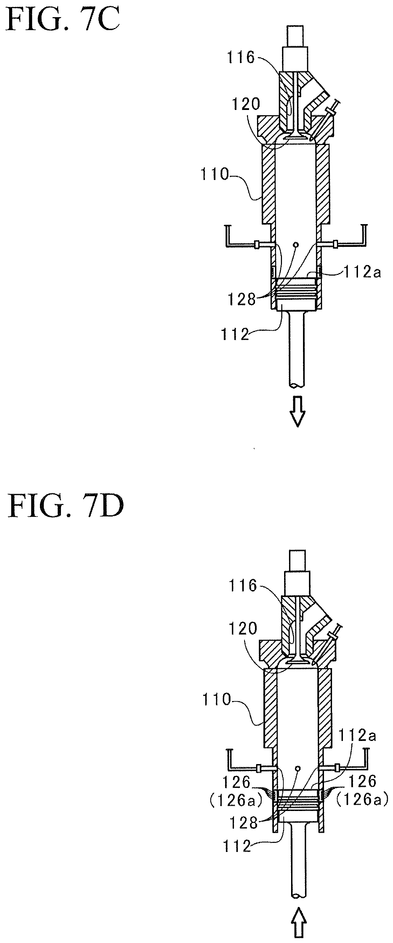

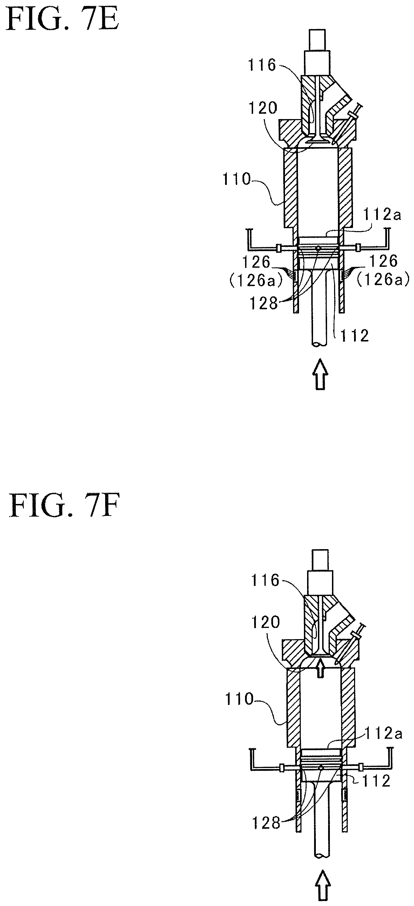

FIGS. 7A to 7F are schematic views showing the operation of the piston 112 of the second explanatory example. FIGS. 7A to 7F shows positions of the piston 112 at times corresponding to FIGS. 4A to 4F of the above-described embodiment, respectively.

As shown in FIGS. 7A to 7F, in the second explanatory example, the second fuel injection portions 128 are provided at positions closer to the lower end of the cylinder 110 than the second fuel injection portions 128 of the above-described embodiment and first explanatory example.

Specifically, as shown in FIGS. 7A to 7F, the second fuel injection portions 128 are provided at positions closer to the lower end of the cylinder 110 than the position of the end portion 112a of the piston 112 at the time the exhaust valve 120 closes the exhaust port 116.

Similarly to the above-described embodiment, the fuel injection controller 152 makes the second fuel injection portions 128 inject fuel gas, after the fuel injection from at least the first fuel injection portions 126 is started, before the exhaust valve 120 is closed, and before the second fuel injection portions 128 are closed by the piston 112 (in the period between the state shown in FIG. 7D and the state shown in FIG. 7E).

In this way, even if the second fuel injection portions 128 are provided on the lower end-side of the cylinder 110 than the position of the end portion 112a of the piston 112 at the time the exhaust valve 120 is closed, premixed gas q is produced by mixing fuel gas into an area having only active gas p before the combustion operation occurs in the combustion chamber 140, and thus it is possible to improve the entire combustion efficiency. In addition, the fuel gas injected from the second fuel injection portions 128 is mixed into an area having only active gas p at the lower end-side of the cylinder 110. Therefore, it is possible to secure a sufficient time in which the fuel gas is mixed into active gas p before the explosion occurs in the combustion chamber 140.

In the above-described embodiment and explanatory examples, a case is described in which the plurality of second fuel injection portions 128 are provided on the entire circumference of the cylinder 110 at the same position in the stroke direction of the piston 112. However, one second fuel injection portion 128 may be provided therein, or a plurality of second fuel injection portions 128 may be provided at different positions in the stroke direction of the piston 112.

Additionally, in the above-described embodiment and explanatory examples, a case is described in which five first fuel injection portions 126 (five openings 126a) are provided on each scavenging port 122. However, the number of the first fuel injection portion(s) 126 provided on each scavenging port 122 may be one, or may be three or more.

### Industrial Applicability

The present invention can be applied to a uniflow-scavenged two-cycle engine in which premixed gas produced by injecting fuel gas into active gas imported from a scavenging port is burned, and to a fuel injection method for the uniflow-scavenged two-cycle engine.

### Description of Reference Signs

- 100: uniflow-scavenged two-cycle engine
- 110: cylinder
- 112: piston
- 112a: end portion
- 116: exhaust port
- 120: exhaust valve
- 122: scavenging port
- 126: first fuel injection portion
- 128: second fuel injection portion
- 140: combustion chamber

## Claims

1. A uniflow-scavenged two-cycle engine (100) comprising:
a cylinder (110) inside which a combustion chamber (140) is formed;
a piston (112) which slides inside the cylinder (110);
a scavenging port (122) which is provided on one end-side of the cylinder (110) in a stroke direction of the piston (112) and which imports active gas into the combustion chamber (140) in accordance with sliding movement of the piston (112);
an exhaust port (116) provided on another end-side of the cylinder (110) in the stroke direction;
an exhaust valve (120) which opens and closes the exhaust port (116);
a first fuel injection portion (126) which is provided on the scavenging port (122) and which injects fuel gas into the active gas imported to the scavenging port (122); **characterized by**
a second fuel injection portion (128) which is provided at a position closer to the other end of the cylinder (110) than the scavenging port (122) in the stroke direction, which injects, before the exhaust valve (120) closes the exhaust port (116), fuel gas into the active gas imported from the scavenging port (122) into the cylinder (110), and which injects no fuel gas after the exhaust valve closes the exhaust port.

2. The uniflow-scavenged two-cycle engine (100) according to claim 1,
wherein the second fuel injection portion (128) is provided at a position closer to the other end of the cylinder (110) in the stroke direction than an end portion of the piston (112) which faces the other end of the cylinder (110) in the stroke direction at the time the exhaust valve (120) closes the exhaust port (116).

3. The uniflow-scavenged two-cycle engine (100) according to claim 1,
wherein the second fuel injection portion (128) is provided at a position closer to the one end of the cylinder (110) in the stroke direction than an end portion of the piston (112) which faces the other end of the cylinder (110) in the stroke direction at the time the exhaust valve (120) closes the exhaust port (116).

4. A fuel injection method for a uniflow-scavenged two-cycle engine (100) in which fuel gas is injected into active gas imported from a scavenging port (122) during sliding of a piston (112) inside a cylinder (110) inside which a combustion chamber (140) is formed, the fuel injection method comprising:
a first injection step of injecting fuel gas into active gas at the time the active gas is imported from the scavenging port (122) into the cylinder (110); **characterized in that**
the fuel injection method further comprises:
a second injection step of further injecting, before the exhaust valve (120) closes the exhaust port (116), fuel gas into the active gas which has been imported into the cylinder (110), wherein after the exhaust valve closes the exhaust port, no fuel gas is injected into the active gas which has been imported into the cylinder.

## Patentansprüche

1. Zweitaktmotor mit Gleichstromspülung (100), der Folgendes aufweist:
einen Zylinder (110), in dem eine Brennkammer (140) ausgebildet ist;
einen Kolben (112), der in dem Zylinder (110) gleitet;
eine Spülöffnung (122), die an einer Endseite des Zylinders (110) in einer Hubrichtung des Kolbens (112) bereitgestellt ist und die ein Aktivgas in die Brennkammer (140) gemäß der Gleitbewegung des Kolbens (112) einführt;
eine Abgasöffnung (116), die an einer anderen Endseite des Zylinders (110) in der Hubrichtung bereitgestellt ist,
ein Abgasventil (120), das die Abgasöffnung (116) öffnet und schließt;
einen ersten Kraftstoffeinspritzabschnitt (126), der an der Spülöffnung (122) bereitgestellt ist und der ein Kraftstoffgas in das zu der Spülöffnung (126) eingeführte Aktivgas einspritzt; **gekennzeichnet durch**
einen zweiten Kraftstoffeinspritzabschnitt (128), der an einer Position bereitgestellt ist, die in der Hubrichtung näher an dem anderen Ende des Zylinders (110) liegt als die Spülöffnung (122), der, bevor das Abgasventil (120) die Abgasöffnung (116) schließt, ein Kraftstoffgas in das von der Spülöffnung (122) in den Zylinder (110) eingeführte Aktivgas einspritzt, und der kein Kraftstoffgas einspritzt, nachdem das Abgasventil die Abgasöffnung schließt.

2. Zweitaktmotor mit Gleichstromspülung (100) nach Anspruch 1,
wobei der zweite Kraftstoffeinspritzabschnitt (128) an einer Position bereitgestellt ist, die zu der Zeit, zu der das Abgasventil (120) die Abgasöffnung (116) schließt, in der Hubrichtung näher an dem anderen Ende des Zylinders (110) liegt als ein Endabschnitt des Kolbens (112), der in der Hubrichtung dem anderen Ende des Zylinders zugewandt ist.

3. Zweitaktmotor mit Gleichstromspülung (100) nach Anspruch 1,
wobei der zweite Kraftstoffeinspritzabschnitt (128) an einer Position bereitgestellt ist, die zu der Zeit, zu der das Abgasventil (120) die Abgasöffnung (116) schließt, in der Hubrichtung näher an dem einen Ende des Zylinders (110) liegt als ein Endabschnitt des Kolbens (112), der in der Hubrichtung dem anderen Ende des Zylinders (110) zugewandt ist.

4. Kraftstoffeinspritzverfahren für einen Zweitaktmotor mit Gleichstromspülung (100), bei dem ein Kraftstoffgas in ein Aktivgas eingespritzt wird, das von einer Spülöffnung (112) während eines Gleitens eines Kolbens (112) in einen Zylinder (110) eingeführt wird, in dem eine Brennkammer (140) ausgebildet ist, wobei das Kraftstoffeinspritzverfahren Folgendes aufweist:
einen ersten Einspritzschritt des Einspritzens eines Kraftstoffgases in das Aktivgas zu der Zeit, zu der das Aktivgas von der Spülöffnung (122) in den Zylinder (110) eingeführt wird; **dadurch gekennzeichnet, dass**
das Kraftstoffeinspritzverfahren ferner
einen zweiten Einspritzschritt aufweist, bei dem, bevor das Abgasventil (120) die Abgasöffnung (116) schließt, ferner ein Kraftstoffgas in das Aktivgas eingespritzt wird, das in den Zylinder (110) eingeführt wurde, wobei, nachdem das Abgasventil die Spülöffnung schließt, kein Kraftstoffgas in das Aktivgas eingespritzt wird, das in den Zylinder eingeführt wurde.

## Revendications

1. Moteur à deux temps équicourant à balayage (100) comprenant :
un cylindre (110) à l'intérieur duquel une chambre de combustion (140) est formée ;
un piston (112) qui coulisse à l'intérieur du cylindre (110) ;
un orifice de balayage (122) qui est prévu sur un côté d'extrémité du cylindre (110) dans une direction de course du piston (112) et qui importe du gaz actif dans la chambre de combustion (140) selon le mouvement de coulissement du piston (112) ;
un orifice d'échappement (116) prévu d'un autre côté d'extrémité du cylindre (110) dans la direction de course ;
une valve d'échappement (120) qui ouvre et ferme l'orifice d'échappement (116) ;
une première partie d'injection de carburant (126) qui est prévue sur l'orifice de balayage (122) et qui injecte du gaz combustible dans le gaz actif importé vers l'orifice de balayage (122) ; **caractérisé par** :
une seconde partie d'injection de carburant (128) qui est prévue dans une position plus à proximité de l'autre extrémité du cylindre (110) que l'orifice de balayage (122) dans la direction de course, qui injecte, avant que la valve d'échappement (120) ne ferme l'orifice d'échappement (116), du gaz combustible dans le gaz actif importé depuis l'orifice de balayage (122) dans le cylindre (110), et qui n'injecte pas de gaz combustible après que la valve d'échappement a fermé l'orifice d'échappement.

2. Moteur à deux temps équicourant à balayage (100) selon la revendication 1,
dans lequel la seconde partie d'injection de carburant (128) est prévue dans une position plus proche de l'autre extrémité du cylindre (110) dans la direction de course qu'une partie d'extrémité du piston (112) qui fait face à l'autre extrémité du cylindre (110) dans la direction de course au moment où la valve d'échappement (120) ferme l'orifice d'échappement (116).

3. Moteur à deux temps équicourant à balayage (100) selon la revendication 1,
dans lequel la seconde partie d'injection de carburant (128) est prévue dans une position plus proche de la une extrémité du cylindre (110) dans la direction de course qu'une partie d'extrémité du piston (112) qui fait face à l'autre extrémité du cylindre (110) dans la direction de course au moment où la valve d'échappement (120) ferme l'orifice d'échappement (116).

4. Procédé d'injection de carburant pour un moteur à deux temps équicourant à balayage (100) dans lequel le gaz combustible est injecté dans le gaz actif importé par un orifice de balayage (122) pendant le coulissement d'un piston (112) à l'intérieur d'un cylindre (110) à l'intérieur duquel une chambre de combustion (140) est formée, le procédé d'injection de carburant comprenant :
une première étape d'injection pour injecter du gaz combustible dans le gaz actif au moment où le gaz actif est importé de l'orifice de balayage (122) dans le cylindre (110) ; **caractérisé en ce que** :
le procédé d'injection de carburant comprend en outre :
une seconde étape d'injection pour continuer à injecter, avant que la valve d'échappement (120) ne ferme l'orifice d'échappement (116), du gaz combustible dans le gaz actif qui a été importé dans le cylindre (110), dans lequel, après que la valve d'échappement a fermé l'orifice d'échappement, aucun gaz combustible n'est injecté dans le gaz actif qui a été importé dans le cylindre.
